# EUROPÄISCHE PATENTSCHRIFT

(11) **EP 3 285 943 B1**
(45) Veröffentlichungstag und Bekanntmachung des Hinweises auf die Patenterteilung: **29.09.2021**
(21) Anmeldenummer: 16714885.7
(22) Anmeldetag: 06.04.2016
(51) Int. Cl.: B22F 10/20, B22F 10/30, B33Y 10/00, B33Y 50/02, B29C 64/153, B29C 64/386

(54) **VERFAHREN ZUM HERSTELLEN EINES DREIDIMENSIONALEN BAUTEILS**
METHOD FOR PRODUCING A THREE-DIMENSIONAL COMPONENT
PROCÉDÉ POUR LA FABRICATION D'UN COMPOSANT TRIDIMENSIONNEL

(30) Priorität: 22.04.2015 DE 102015106218; 19.08.2015 DE 102015113700
(43) Veröffentlichungstag der Anmeldung: 28.02.2018
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2016/057506
(87) Internationale Veröffentlichungsnummer: WO 2016/169768

(56) Entgegenhaltungen:
- WO-A2-2014/135137
- DE-U1-202010 010 771
- US-A1- 2015 024 233

## Beschreibung

Die Erfindung betrifft ein Verfahren zum Herstellen eines dreidimensionalen Bauteils durch ein generatives Bauverfahren.

Aus EP 2 598 313 A2 ist ein Verfahren zum Herstellen dreidimensionaler Bauteile bekannt, bei welchem das Bauteil generativ, d. h. durch Verfestigen eines durch Strahlung verfestigbaren Baumaterials erfolgt. Angesprochen sind insbesondere ein selektives Laserschmelzverfahren oder selektives Lasersinterverfahren, bei solchen Verfahren wird das pulverartige Baumaterial durch einen Laserstrahl verschmolzen oder zumindest versintert. Dazu wird eine generative Bauvorrichtung vorgesehen, insbesondere eine sogenannte SLM- oder SLS-Vorrichtung, die eine Prozesskammer, eine Bauplattform zum Tragen des Baumaterials und eine über der Bauplattform angeordnete Strahlungsquelle aufweist. Die Strahlungsquelle ist in der Lage, einen punkt- oder linienförmigen Energieeintrag zur Erzeugung eines Schmelz- oder Sinterbereiches in dem Baumaterial zu erzeugen. Der Strahl der Strahlungsquelle wird über einen Scanner geführt, der Scanner wir durch einen Prozessor angesteuert und sorgt dafür, dass der Strahl der Strahlungsquelle, insbesondere ein Laserstrahl das in dünnen Schichten aufgetragene Baumaterial selektiv, d. h. nur an solchen Stellen verfestigt, die später einen Abschnitt des Bauteils bilden.

Bei der vorstehend bezeichneten Patentanmeldung ist es bereits bekannt, eine Sensorvorrichtung vorzusehen, die selektiv durch den Laserstrahl erzeugte Schmelze- oder Sinterbereiche erfasst und daraus Sensorwerte zur Charakterisierung der Schmelz- oder Sinterbereiche erzeugt. Aus der Form der Schmelz- oder Sinterbereiche können Aussagen über die Bauteilqualität getroffen werden. Diese Sensorwerte werden zusammen mit den die Sensorwerte im Bauteil lokalisierenden Koordinatenwerten abgespeichert.

WO 2014/135137 A1 offenbart ein Verfahren zur Beurteilung der Strukturqualität von dreidimensionalen Bauteilen.
Davon ausgehend liegt der Erfindung die Aufgabe zugrunde, ein Verfahren mit den Merkmalen des Oberbegriffs des Anspruchs 1 derart auszubilden, dass weitergehende Aussagen über die Bauteilfestigkeit getroffen werden können und eine Einklassifizierung bereits hergestellter und ggf. teilweise mit Fehlern behafteter Bauteile in "ausreichend belastungsfähig" oder "nicht ausreichend belastungsfähig" erfolgen kann.

Diese Aufgabe wird durch die kennzeichnenden Merkmale des Anspruchs 1 gelöst, vorteilhafte Weiterbildung ergeben sich aus den Unteransprüchen.

Als Kern der Erfindung wird es angesehen, Kraftfluss- und Belastungsinformationen zu ermitteln, die für die herzustellenden Bauteile maßgeblich sind oder die in bereits hergestellten Bauteilen durch ein Messverfahren ermittelt werden. Dadurch lassen sich zunächst in üblicher Weise kritische oder hochbelastete Belastungsbereiche in einem herzustellenden oder bereits hergestellten Bauteil ermitteln. Sodann erfolgt eine räumliche Korrelation der zur Evaluierung der Bauteilqualität ermittelten Sensorwerte zusammen mit dem sie lokalisierenden Koordinatenwerte mit den Koordinaten der hochbelasteten oder kritische Belastungs- und Kraftflussinformationen. Diese auf unterschiedliche Weise gewonnenen Informationen werden gleichsam elektronisch "übereinandergelegt", d. h. räumlich korreliert und dabei überprüft, ob Bauteilfehler, die durch die Sensorwerte charakterisiert werden auf oder in der Nähe von Koordinaten liegen, die für die Belastungs- und Kraftflussinformationen maßgeblich sind.

Man kann bei Belastungs- und Kraftflussinformationen auch von Kraftflusslinien sprechen, der Kraftfluss kann in Form von Linien in der Darstellung eines Bauteils graphisch dargestellt werden. Liegen nun Bauteilfehler in kritischen oder hochbelasteten Zonen dieser Kraftflusslinien, dann würde dies bedeuten, dass durch einen eventuell bestehenden Baufehler innerhalb des Bauteils im Bereich einer Kraftflusslinie das Bauteil wesentlich geschwächt ist und deswegen als Ausschuss betrachtet werden muss, oder dass Bauteile, die zwar ein oder mehrere oder sogar viele Bauteilfehler enthalten, als hoch belastbar eingestuft werden können, weil die Bauteilfehler ― festgestellt und charakterisiert durch die Sensorwerte ― ausreichend weit von den Kraftflusslinien oder Kraftflussbereichen entfernt sind.

In vorteilhafter Weise werden sowohl die Sensorwerte mittels einer Visualisierungseinrichtung in mehrdimensionaler Darstellung, bezogen auf ihren Erfassungsort im Bauteil, dargestellt. Gleiches gilt auch für die Koordinaten der kritischen Belastungs- und Kraftflussinformationen, die als Linien oder Bereiche graphisch dargestellt werden können.

Um einer Bedienungsperson eine schnelle Entscheidung zu erlauben, ob ein Weiterbau des Bauteils bei auftretenden Bauteilfehlern kritisch oder unkritisch ist, können mit Vorteil die Bauteilqualität negativ beeinflussende Sensorwerte optisch hervorgehoben werden. Die Bedienungsperson sieht damit auf der Visualisierungseinrichtung einerseits das Bauteil in zwei- oder mehrdimensionaler Darstellung, in dieses Bauteil können graphisch kritische Kraftflussbereiche oder Kraftflusslinien eingelegt werden und optisch angezeigt werden und beim Bauvorgang können die durch die Sensoren erfassten, sich ggf. negativ auf die Qualität des Bauteils auswirkenden Sensorwerte ebenfalls dargestellt werden. Eine Bedienungsperson sieht dann optisch sofort, ob Baufehler mehr oder mindergroßen Ausmaßes in einem Kraftflusslinienbereich liegen, oder nur in der Nähe oder weit davon entfernt.

Erfolgt z. B. eine unzureichende Aufschmelzung des Baumaterials in einem betreffend den kritischen Kraftfluss im Bauteil völlig vernachlässigbaren Mantelbereich des Bauteils, kann weitergebaut werden, ein solcher Baufehler wird die Belastbarkeit des Bauteils in keinster Weise beeinflussen. Liegt hingegen ein Baufehler mitten in einem kritischen Bereich auf einer Kraftflusslinie, die vorher berechnet wurde, dann ist mit der Verwendung eines solchen Bauteils höchste Vorsicht geboten, da eine unzureichende Aufschmelzung im Bereich einer Kraftflusslinie oder eines Kraftflussbereichs zu einem Bruch des Bauteils führen kann. Entweder eine Bedienungsperson oder ein an die Vorrichtung angeschlossener Prozessor ist in der Lage, bei Feststellung von sich negativ auf die Bauteilqualität auswirkenden Sensorwerten im Bereich von Belastungs- und Kraftflussinformationen bzw. Kraftflusslinie oder Kraftflussbereichen den Bauvorgang abzubrechen.

Es ist aber auch möglich, einen Reparaturvorgang in die Wege zu leiten, d.h. bei Feststellung einer unzureichenden Aufschmelzung beispielsweise in Folge von einem mangelnden Pulverauftrag erneut eine Pulverschicht auf den bereits verfestigten Bereich des Bauteils aufzutragen und dann den kritischen Bereich, der zu dem negativen Sensorwert geführt hat, erneut aufzuschmelzen und dadurch zu reparieren, d. h. in einen Zustand zu versetzen, in dem auch dieser vorher nicht belastbare Bereich höchsten Belastungsanforderungen genügt.

In Folge des Verfahrens ist es möglich, die herzustellenden oder hergestellten Bauteile abhängig von den festgestellten Abständen der Bauteilqualität ggf. negativ beeinflussenden Sensorwerten, d. h. Sensorwerte, die z. B. eine mangelnde Aufschmelzung in einem Bauteilbereich von Belastungs- oder Kraftflussinformation oder Linien oder Bereichen belegen als für unterschiedliche Sicherheitsanforderungen als ausreichend zu markieren. Dazu empfiehlt es sich, unterschiedliche Sicherheitsanforderungsstufen zu definieren, sodass z. B. Bauteile, bei denen negative Sensorwerte in Folge von mangelnder bereichsweiser Verschmelzung nicht oder nur in unkritischen Bauteilbereichen festgestellt wurden, als hoch belastbar einzustufen und umgekehrt Bauteile, bei denen Aufschmelzfehler und damit verbundene Sensorwerte in kritischen Belastungsbereichen festgestellt wurden, als völligen Ausschuss einzustufen. Dazwischen ist es möglich, Bauteile mit Baufehlern, die aber beabstandet von den Kraftflusslinien sind, als belastbar zuzulassen, z. B. als "zweite oder dritte Wahl".

Mit Vorteil ist es möglich, eine Darstellung der Sensorwerte als auch der Belastungs- und Kraftflussinformationen als graphisch gestaltetes Qualitätssicherungsbauprotokoll auszudrucken oder abzuspeichern.

Die Erfindung ist anhand von Ausführungsbeispielen in den Zeichnungsfiguren näher erläutert. Dieses zeigen:

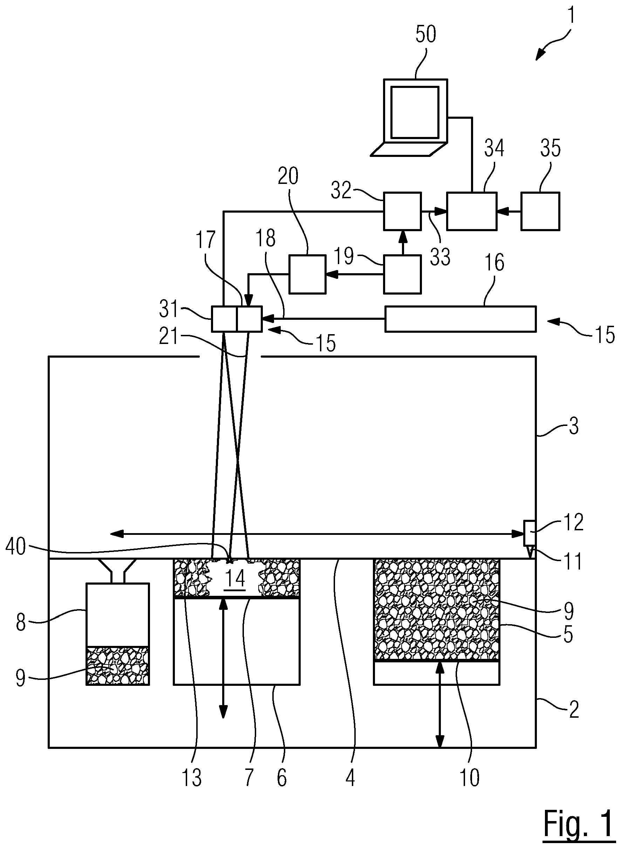

- Fig. 1: eine schematische Darstellung einer generativen Bauvorrichtung, die zur Durchführung des Verfahrens verwendet wird;
- Fig. 2: eine vereinfachte schematische Darstellung eines langgestreckten Bauteils mit graphisch dargestellten Belastungsbereichen bzw. Kraftflusslinien und die Lage von durch Sensorwerte ermittelte Baufehler bezogen auf den Belastungsbereich bzw. die Kraftflusslinien.

Die in Zeichnungsfigur 1 dargestellte generative Bauvorrichtung 1 in Form einer SLM-Vorrichtung weist ein Gehäuse 2 auf, in dem eine Prozesskammer 3 angeordnet ist, wobei im Bereich eines Prozesskammerbodens 4 ein Baumaterial-Vorratsbehälter 5, ein Bauraum 6 ein mit einer höhenverlagerbaren Bauplattform 7 und ein Überlaufbehälter 8 angeordnet sind. Von dem Vorratsbehälter 5 wird pulverartiges Baumaterial 9 mittels eines Beschichters 12 mit einer Beschichterklinge 11 zum Bauraum 6 gefördert und dort auf eine bereits bestehende Pulverlage 13 bzw. die Oberfläche eines teilfertigen Bauteils 14 aufgetragen. Nicht benötigtes Baumaterial wird durch den Beschichter 12 in dem Überlaufbehälter 8 abgeworfen. Über der Prozesskammer ist eine Bestrahlungseinrichtung 15 angeordnet, die einen Laser 16 als Strahlungsquelle und einen Scanner 17 zum Ablenken der Laserstrahlung 18 umfasst. Der Scanner 17 wird von einem Prozessor 20 gesteuert, der Baudaten aus einem Speicher 19 verarbeitet.

Eine Sensorvorrichtung 31 in Form beispielsweise einer Kamera detektiert die Form und Größe eines Schmelzeflecks 40 und generiert daraus in einem Prozessor 32 Sensorwerte, die über einen Ausgang 33 zusammen mit den sie lokalisierenden Koordinaten aus dem Speicher 19 einem weiteren Prozessor 34 zugeführt werden. Es sei angemerkt, dass eine Verarbeitung auch in dem Prozessor 20 erfolgen kann, aus Übersichtlichkeitsgründen sind die beiden Prozessoren 20 und 34 allerdings getrennt dargestellt.

Betreffend das herzustellende Bauteil 14 wird durch ein Berechnungs- oder Messverfahren ermittelt, wo im Bauteil 14 kritische Belastungsbereiche vorliegen. Diese Bereiche werden als Belastungs- und Kraftflussinformationen in einem Speicher 35 abgelegt und von dort dem Prozessor 34 zur Verfügung gestellt.

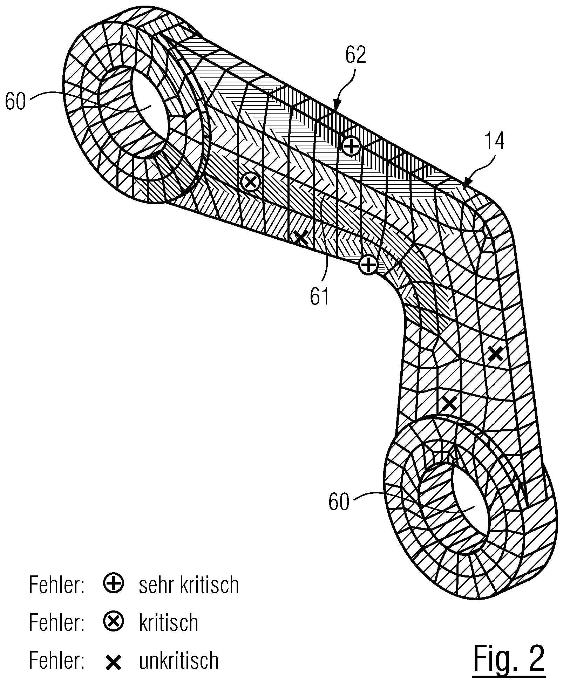

Der Prozessor 34 korreliert nun die Lage der eventuelle Baufehler repräsentierende Sensorwerte aus dem Speicher 32 mit den im Speicher 35 abgelegten Belastungs- und Kraftflussinformationen, denen natürlich auch räumliche lokalisierende Koordinatenwerte zugeordnet sind. Das Ergebnis der Korrelation wird über eine Visualisierungseinrichtung 50 ausgegeben und kann graphisch dargestellt werden, wozu auf Figur 2 verwiesen wird. In der Darstellung gemäß Figur 2 sind Belastungen bzw. Kraftflüsse durch Schraffuren dargestellt. Unterschiedliche Belastungen bzw. unterschiedliche Kraftflüsse sind durch unterschiedliche Schraffuren dargestellt.

Diese Zeichnungsfigur zeigt stark schematisiert ein Bauteil 14 länglicher winkelartiger Form, das z. B. als längliches Hebelelement ausgebildet ist und z. B. mit zwei Anlenkbohrungen 60 versehen ist. Anhand dieser Anlenkbohrungen 60, durch welche Kräfte in das Bauteil 14 eingeleitet werden, können Belastungs- und Kraftflusskoordinaten berechnet werden und als Kraftflusslinien 61 oder Kraftflussbereich 62 graphisch dargestellt werden. Diese Belastungsinformationen, z. B. Belastungsinformationen als "von-Mises-Vergleichsspannungen" nehmen unterschiedliche Werte ein, nämlich von nahe null bis zu Maximalwerten. In der Regel ist zu prüfen, ob die maximal an einem Bauteil auftretende Spannung in allen Bereichen kleiner ist als die zulässige Spannung, z. B. die Streckgrenze des eingesetzten Werkstoffs für das Bauteil.

Damit ist es möglich, für alle Elemente oder Bereiche des Bauteils eine Belastungsinformation zu bestimmen. Aus diesen Belastungsinformationen werden die kritischen oder hochbelasteten Bereiche bestimmt und dann erfindungsgemäß überprüft, ob sich negativ auf die Bauteilqualität auswirkende Sensorwerte im Bereich von solchen kritischen oder hoch belasteten Bereichen der Belastungs- oder Kraftflussinformationen feststellbar sind oder nicht.

Die Kraftflusslinien 61 bzw. der Kraftflussbereich 62 repräsentiert graphisch den "tragenden" Teil des Bauteils. In kritischen Zonen dieser Bereiche 61, 62 sollte das Bauteil 14 möglichst fehlerfrei gebaut sein, d. h. es sollen kritische Sensorwerte dort nicht auftreten.

Durch die Sensorvorrichtung 31 der Bauvorrichtung 1 werden nun Sensorwerte zusammen mit sie lokalisierenden Koordinatenwerten ermittelt, die beispielhaft dargestellt sind. Die als ⊕ dargestellten Sensorwerte liegen auf den Kraftflusslinien 61 oder zumindest im Bereich des Kraftflussbereichs 62 und wirken sich sehr kritisch auf die Belastbarkeit des Bauteils 14 aus. Durch die mit einem ⊗ gekennzeichneten Baufehler wird die Qualität des Bauteils 14 zwar reduziert. Die dadurch repräsentierten Baufehler sind allerdings nicht als extrem kritisch einzustufen.

Die X-Baufehler liegen außerhalb der tragenden Bereiche 61, 62 des Bauteils 14 und sind deswegen unkritisch. Der Abstand der Baufehler von den Kraftflusslinien 61 oder Kraftflussbereich 62 kann graphisch dargestellt und vermessen werden. Auf den Kraftflusslinien 61 liegenden Baufehler werden automatisch optisch hervorgehoben damit sie leicht erkennbar sind. Abhängig von der Lage der Baufehler ist es ggf. möglich, mit dem Beschichter 12 auf einen kritischen Bauteilbereich noch einmal eine Schicht aufzutragen und durch den Laserstrahl 21 noch einmal aufzuschmelzen, um die Festigkeit des Bauteils 14 im Wege einer "In-Prozess-Reparatur" zu verbessern.

### BEZUGSZEICHENLISTE

- 1: Bauvorrichtung
- 2: Gehäuse
- 3: Prozesskammer
- 4: Prozesskammerboden
- 5: Vorratsbehälter
- 6: Bauraum
- 7: Bauplattform
- 8: Überlaufbehälter
- 9: Baumaterial

- 11: Beschichterklinge
- 12: Beschichter
- 13: Pulverlage
- 14: Bauteil
- 15: Bestrahlungseinrichtung
- 16: Laser
- 17: Scanner
- 18: Laserstrahlung
- 19: Speicher
- 20: Prozessor
- 21: Laserstrahl

- 31: Sensorvorrichtung
- 32: Prozessor
- 33: Ausgang von 32

- 40: Schmelzefleck

- 50: Visualisierungseinrichtung

- 60: Anlenkbohrung
- 61: Kraftflusslinie
- 62: Kraftflussbereich

## Patentansprüche

1. Verfahren zum Herstellen eines dreidimensionalen Bauteils (14) durch ein generatives Bauverfahren, bei welchem das Bauteil (14) durch Verfestigen eines durch Strahlung (18) verfestigbaren Baumaterials (9) erfolgt, insbesondere selektives Laserschmelzverfahren oder selektives Lasersinterverfahren, bei welchem das Bauteil (14) durch aufeinanderfolgendes Verfestigen eines durch Einwirkung einer Strahlung (18) verfestigbaren Baumaterials (9) durch Aufschmelzen oder Versintern erfolgt, mit folgenden Merkmalen:
- Vorsehen einer generativen Bauvorrichtung (1), insbesondere einer SLM- oder SLS-Vorrichtung mit einer Prozesskammer (3), einer Bauplattform (7) zum Tragen des Baumaterials (9) und einer über der Bauplattform (7) angeordneten Strahlungsquelle zur Erzeugung eines punkt- oder linienförmigen Energieeintrages zur Erzeugung eines Schmelz- oder Sinterbereiches in dem Baumaterial (9);
- Vorsehen einer Sensorvorrichtung (31) zur selektiven Erfassung erzeugter Schmelze- oder Sinterbereiche und daraus Erzeugung von Sensorwerten zur Charakterisierung der Schmelz- oder Sinterbereiche sowie
- Abspeicherung dieser Sensorwerte zusammen mit den die Sensorwerte im Bauteil (14) lokalisierenden Koordinatenwerten, **gekennzeichnet durch** folgende Merkmale:
- Ermittlung von Belastungs- und Kraftflussinformationen in dem herzustellenden oder hergestellten Bauteil (14) durch ein Berechnungs- oder Messverfahren zur Ermittlung kritischer Belastungsbereiche in dem herzustellenden oder hergestellten Bauteil (14);
- räumliche Korrelation der zur Evaluierung der Bauteilqualität ermittelten Sensorwerte zusammen mit den sie lokalisierenden Koordinatenwerten mit Koordinaten der Belastungs- und Kraftflussinformationen und Beurteilung des fertigzustellenden oder hergestellten Bauteils (14) derart, dass
- Bauteile (14), bei denen sich negativ auf die Bauteilqualität auswirkende Sensorwerte im Bereich von kritischen oder hoch belasteten Bereichen der Belastungs- und Kraftflussinformationen festgestellt werden, als nicht der geforderten Bauteilqualität entsprechende Bauteile (14) eingestuft werden und
- Bauteile (14), bei welchen die Bauteilqualität negativ beeinflussende Sensorwerte mit ausreichendem Abstand von kritischen oder hoch belasteten Bereichen der Belastungs- und Kraftflussinformationen festgestellt werden, als der geforderten Bauteilqualität entsprechende Bauteile (14) eingestuft werden,
wobei
bei Feststellung von sich negativ auf die Bauteilqualität auswirkenden Sensorwerten im Bereich von kritischen oder hoch belasteten Bereichen der Belastungs- und Kraftflussinformationen oder Kraftflussbereichen (62) während des Bauvorganges der Bauvorgang abgebrochen wird; oder
bei Feststellung von sich negativ auf die Bauteilqualität auswirkenden Sensorwerten im Bereich von kritischen oder hoch belasteten Bereichen der Belastungs- und Kraftflussinformationen ein Bauteilbereich, bei welchem negativ sich auf die Bauteilqualität auswirkende Sensorwerte festgestellt wurden, erneut beschichtet und/oder zu Reparaturzwecken erneut aufgeschmolzen wird und sodann erneut durch die Sensorvorrichtung (31) Sensorwerte zur Charakterisierung des erneut aufgeschmolzenen Schmelz- oder Sinterbereiches erstellt werden.

2. Verfahren nach Anspruch 1, **dadurch gekennzeichnet, dass** mittels einer Visualisierungseinrichtung (50) sowohl die Sensorwerte in zwei- oder mehrdimensionaler Darstellung bezogen auf ihren Erfassungsort im Bauteil (14) als auch die kritischen oder hoch belasteten Bereichen der Belastungs- und Kraftflussinformationen im Bauteil (14) graphisch dargestellt werden.

3. Verfahren nach Anspruch 2, **dadurch gekennzeichnet, dass** im Bereich von kritischen oder hoch belasteten Bereichen der Belastungs- und Kraftflussinformationen im Bauteil (14) angeordnete, die Bauteilqualität negativ beeinflussende Sensorwerte optisch hervorgehoben werden.

4. Verfahren nach einem der vorhergehenden Ansprüche, **dadurch gekennzeichnet, dass** mehrere durch das Bauteil (14) verlaufende Belastungs- und Kraftflussinformationen gemeinsam als Kraftflussbereiche (62) berechnet und dargestellt werden und die Bauteilqualität negativ beeinflussende Sensorwerte im Bereich von kritischen oder hoch belasteten Bereichen der Kraftflussbereiche (62) angezeigt und/oder optisch hervorgehoben werden.

5. Verfahren nach Anspruch 2, **dadurch gekennzeichnet, dass** der Abstand der kritischen oder hoch belasteten Bereichen der Belastungs- und Kraftflussinformationen oder Kraftflussbereiche (62) von die Bauteilqualität negativ beeinflussenden Sensorwerten unter Zuhilfenahme der Visualisierungseinrichtung (50) vermessbar ist.

6. Verfahren nach einem der vorhergehenden Ansprüche, **dadurch gekennzeichnet, dass** eine Darstellung der Sensorwerte als auch der kritischen oder hoch belasteten Bereichen der Belastungs- und Kraftflussinformationen oder Kraftflussbereiche (62) als graphisch gestaltetes QualitätssicherungsBauprotokoll ausdruckbar oder abspeicherbar sind.

## Claims

1. A method for manufacturing a three-dimensional component (14) by means of an additive construction method in which the component (14) is manufactured by solidifying construction material (9) that can be solidified using radiation (18), especially a selective laser melting method or a selective laser sintering method, in which the component (14) is manufactured by successively solidifying construction material (9) that can be solidified using the impact of radiation (18) by melting or sintering, comprising the following features:
providing an additive construction apparatus (1), especially an SLM apparatus or an SLS apparatus comprising a process chamber (3), a construction platform (7) for carrying the construction material (9), and a radiation source arranged above the construction platform (7) for generating a point-type or linear energy input for creating a melting or sintering section in the construction material (9);
providing a sensor apparatus (31) for the selective detection of created melting or sintering sections and for the generation of sensor values therefrom for characterizing the melting or sintering sections; and
storage of said sensor values together with coordinate values localizing the sensor values in the component (14), **characterized by** the following features:
determination of load and flux information in the component (14) produced or to be produced by means of a calculation or measuring method for determining critical load areas in the component (14) manufactured or to be manufactured;
spatial correlation of the sensor values determined for the evaluation of the component quality together with the coordinate values localizing said values with coordinates of the load and flux information, and assessment of the component (14) finished or to be finished, such that
components (14) for which sensor values negatively impacting the component quality are determined in the range of critical or highly loaded sections of the load and flux information are classified as components (14) not corresponding to the requested component quality, and
components (14) for which sensor values negatively impacting the component quality are determined with sufficient distance from critical or highly loaded sections of the load and flux information are classified as components (14) corresponding to the requested component quality; wherein
if sensor values negatively impacting the component quality in the range of critical or highly loaded sections of the load and flux information or flux areas (62) are determined during the construction process, the construction process is aborted; or
if sensor values negatively impacting the component quality in the range of critical or highly loaded sections of the load and flux information are determined, a component section for which sensor values negatively impacting the component quality were determined is re-coated and/or re-molten for repair and then sensor values are re-generated by the sensor apparatus (31) for characterizing the re-molten melting or sintering section.

2. A method according to claim 1, **characterized in that** both the sensor values in a two-dimensional or multidimensional illustration related to their detection position in the component (14) and the critical or highly loaded sections of the load and flux information in the component (14) are graphically represented using a visualization device (50).

3. A method according to claim 2, **characterized in that** sensor values negatively impacting the component quality arranged in the range of critical or highly loaded sections of the load and flux information in the component (14) are visually highlighted.

4. A method according to any of the preceding claims, **characterized in that** several pieces of load and flux information running through the component (14) are collectively calculated and/or represented as flux areas (62), and sensor values negatively impacting the component quality in the range of critical or highly loaded sections of the flux areas (62) are displayed and/or visually highlighted.

5. A method according to claim 2, **characterized in that** the distance of the critical or highly loaded sections of the load and flux information or flux areas (62) from sensor values negatively impacting the component quality can be measured with the help of the visualization device (50).

6. A method according to any of the preceding claims, **characterized in that** a representation of both the sensor values and the critical or highly loaded areas of the load and flux information or flux areas (62) can be printed out or stored as a graphically represented quality control construction log.

## Revendications

1. Procédé de fabrication d'un composant tridimensionnel (14) au moyen d'un procédé de construction additive, dans lequel le composant (14) est fabriqué par solidification d'un matériau de construction (9) solidifiable par rayonnement (18), en particulier un procédé de fusion sélective par laser ou un procédé de frittage sélectif par laser, dans lequel le composant (14) est fabriqué par solidification successive d'un matériau de construction (9) solidifiable par rayonnement (18) par fusion ou frittage, présentant les caractéristiques suivantes :
fournir un appareil de construction additive (1), en particulier un appareil SLM ou un appareil SLS comprenant une chambre de traitement (3), une plate-forme de construction (7) pour porter le matériau de construction (9), et une source de rayonnement disposée au-dessus de la plate-forme de construction (7) pour générer une entrée d'énergie de type ponctuel ou linéaire pour créer une section de fusion ou de frittage dans le matériau de construction (9) ;
fournir un appareil de détection (31) pour la détection sélective de sections de fusion ou de frittage créées et pour la génération de valeurs de détection à partir de celles-ci pour caractériser les sections de fusion ou de frittage ; et
stockage desdites valeurs de capteur avec des valeurs de coordonnées localisant les valeurs de capteur dans le composant (14), **caractérisé par** les caractéristiques suivantes :
détermination des informations de charge et de flux dans le composant (14) fabriqué ou à fabriquer au moyen d'un procédé de calcul ou de mesure pour déterminer les zones de charge critiques dans le composant (14) fabriqué ou à fabriquer ;
corrélation spatiale des valeurs de capteur déterminées pour l'évaluation de la qualité du composant avec les valeurs de coordonnées localisant lesdites valeurs avec les coordonnées des informations de charge et de flux, et évaluation du composant (14) fini ou à finir, de sorte que les composants (14) pour lesquels des valeurs de capteur ayant un impact négatif sur la qualité du composant sont déterminées dans la plage des sections critiques ou fortement chargées des informations de charge et de flux sont classés comme des composants (14) ne correspondant pas à la qualité de composant demandée, et
les composants (14) pour lesquels des valeurs de capteur ayant un impact négatif sur la qualité du composant sont déterminées avec une distance suffisante par rapport aux sections critiques ou fortement chargées de la charge et des informations sur les flux sont classés comme composants (14) correspondant à la qualité de composant demandée ; dans lequel
si des valeurs de capteur ayant un impact négatif sur la qualité des composants dans la plage des sections critiques ou fortement chargées des informations sur la charge et le flux ou des zones de flux (62) sont déterminées pendant le processus de construction, le processus de construction est interrompu ; ou
si des valeurs de capteur ayant un impact négatif sur la qualité du composant dans la plage des sections critiques ou fortement chargées des informations de charge et de flux sont déterminées, une section de composant pour laquelle des valeurs de capteur ayant un impact négatif sur la qualité du composant ont été déterminées est recouverte à nouveau et/ou refondue pour réparation, puis des valeurs de capteur sont à nouveau générées par le dispositif de capteur (31) pour caractériser la section de fusion ou de frittage refondue.

2. Procédé selon la revendication 1, **caractérisé en ce qu'**à la fois les valeurs des capteurs dans une illustration bidimensionnelle ou multidimensionnelle liée à leur position de détection dans le composant (14) et les sections critiques ou fortement chargées des informations de charge et de flux dans le composant (14) sont représentées graphiquement en utilisant un dispositif de visualisation (50).

3. Procédé selon la revendication 2, **caractérisé en ce que** les valeurs de capteur ayant un impact négatif sur la qualité du composant disposé dans la plage des sections critiques ou fortement chargées de la charge et des informations de flux dans le composant (14) sont visuellement mises en évidence.

4. Procédé selon l'une quelconque des revendications précédentes, **caractérisé en ce que** plusieurs informations de charge et de flux traversant le composant (14) sont calculées et/ou représentées collectivement comme des zones de flux (62), et les valeurs de capteur ayant un impact négatif sur la qualité du composant dans la plage des sections critiques ou fortement chargées des zones de flux (62) sont affichées et/ou mises en évidence visuellement.

5. Procédé selon la revendication 2, **caractérisé en ce que** la distance des sections critiques ou fortement chargées de la charge et des informations de flux ou des zones de flux (62) par rapport aux valeurs de capteur ayant un impact négatif sur la qualité du composant peut être mesurée à l'aide du dispositif de visualisation (50).

6. Procédé selon l'une quelconque des revendications précédentes, **caractérisé en ce qu'**une représentation à la fois des valeurs de capteur et des zones critiques ou fortement chargées des informations de charge et de flux ou des zones de flux (62) peut être imprimée ou stockée sous la forme d'un journal de construction de contrôle de qualité représenté graphiquement.
